# EUROPÄISCHE PATENTSCHRIFT

(11) **EP 4 186 684 B1**
(45) Veröffentlichungstag und Bekanntmachung des Hinweises auf die Patenterteilung: **18.09.2024**
(21) Anmeldenummer: 22205276.3
(22) Anmeldetag: 03.11.2022
(51) Int. Cl.: B30B 3/00, B30B 3/02, B30B 9/28, B30B 15/00, F16C 13/00, F16C 13/02, F16C 13/06, B30B 11/20, F16C 19/38, F16C 19/54

(54) **PELLETIERPRESSE UND VERFAHREN ZUM BETRIEB EINER PELLETIERPRESSE**
PELLETING PRESS AND METHOD OF USING A PELLETING PRESS
PRESSE À GRANULER ET MÉTHODE D'UTILISATION D'UNE PRESSE À GRANULER

(30) Priorität: 29.11.2021 DE 102021131249
(43) Veröffentlichungstag der Anmeldung: 31.05.2023
(73) Patentinhaber: Salmatec GmbH, 21376 Gödenstorf (DE)
(72) Erfinder: Dyck, Torsten, 21444 Vierhöfen (DE)
(74) Vertreter: VKK Patentanwälte PartG mbB

(56) Entgegenhaltungen:
- EP-B1- 2 522 867
- EP-B1- 2 648 899
- CN-U- 210 994 190
- US-A- 3 502 375
- US-A- 4 834 560

## Beschreibung

Die vorliegende Erfindung betrifft eine Pelletierpresse und ein Verfahren zum Betreiben einer Pelletierpresse.

Bekannte Pelletierpressen, die bspw. zur Herstellung von Pellets als Viehfutter oder als Brennstoff eingesetzt werden, basieren auf dem Prinzip, dass zwischen einer angetriebenen Matrize, bspw. einer Ringmatrize, und jeweiligen Pressrollen, auch Koller genannt, ein Materialfilm entsteht, dessen Dicke die Durchsatzmenge und auch die Qualität der Pellets mitbestimmt.

Da in einer Pelletierpresse zum Pressen der Pellets hohe Kräfte eingesetzt werden, verstellen sich jeweilige Komponenten einer Pelletierpresse, wie bspw. die Koller in ihrer Lage zueinander, so dass die Komponenten regelmäßig nachgestellt werden müssen. Dazu umfassen Pelletierpressen in der Regel eine Einstellvorrichtung zum manuellen Einstellen der Komponenten, wie bspw. eine Schraube.

Das manuelle Einstellen der Komponenten erfolgt in der Regel in einer zu einer Betriebsposition um 90° geneigten Stellung und vorzugsweise in kaltem Zustand, so dass die Pelletierpresse zum Einstellen einige Zeit still stehen muss.

EP 2 522 867 B1 offenbart eine Pelletierpresse gemäss dem Oberbegriff des Anspruchs 1.

Die vorgestellte Erfindung dient zum Bereitstellen einer Pelletierpresse die dauerhaft betrieben werden kann.

Es wird somit gemäß der vorgestellten Erfindung eine Pelletierpresse mit den Merkmalen des Anspruchs 1 und ein Verfahren zum Betrieb einer Pelletierpresse mit den Merkmalen des Anspruchs 6 vorgestellt.

Unter einem mechanischen Federelement ist im Kontext der vorgestellten Erfindung ein reversibel verformbares Element zu verstehen, das mit einer vorgegebenen Kraft in eine vorgegebene Stellung drängt. Insbesondere ist unter einem mechanischen Federelement eine mechanische Feder, wie bspw. eine Ringfeder zu verstehen.

Die vorgestellte Einstellvorrichtung der Pelletierpresse basiert auf dem Prinzip, dass diese eine Anzahl mechanischer Federelemente umfasst, die eine Federkraft bereitstellen, mit der Kegelrollenlager zum Lagern von Kollern einer Pelletierpresse in eine vorgegebene Position gedrückt werden.

Die Anzahl mechanischer Federelemente bewirkt dabei zum einen eine dauerhafte Beaufschlagung der Kegelrollenlager mit Druck, so dass eine Verstellung bzw. ein dauerhaftes Verschieben der Kegelrollenlager aus ihrer Position verhindert wird.

Zum anderen ermöglicht die Anzahl mechanischer Federelemente eine zeitweise Verschiebung der Kegelrollenlager, so dass eine Beschädigung der Kegelrollenlager bspw. durch Verunreinigungen in einem zugeführten Rohstoff durch eine Ausweichbewegung der Kegelrollenlager verhindert wird.

Das vorgesehene mechanische Federelement ist insbesondere wartungsfrei, so dass ein regelmäßiges manuelles Einstellen der Einstellvorrichtung entfällt. Vielmehr stellt sich die Einstellvorrichtung automatisch bzw. selbsttätig durch die von der Anzahl mechanischer Federelemente aufgebrachte Federkraft selbst und kontinuierlich ein. Entsprechend werden die Kegelrollenlager einer entsprechenden Pelletierpresse automatisch durch die Einstellvorrichtung in ihrer vorgegebenen Position gehalten.

Erfindungsgemäß ist vorgesehen, dass das mindestens eine mechanische Federelement ein Ringfederspannelement umfasst.

Ein Ringfederspannelement eignet sich aufgrund seiner Robustheit besonders vorteilhaft zum Bereitstellen einer Kraft um die Kegelrollenlager einer Pelletierpresse in eine vorgegebene Position zu drücken.

Dabei kann das Ringfederspannelement bspw. einen Außendurchmesser von 25mm und einen Innendurchmesser von 21mm aufweisen.

In weiterer Ausgestaltung kann vorgesehen sein, dass das mindestens eine mechanische Federelement dazu konfiguriert ist, das mindestens eine Kegelrollenlager mit einer Kraft zwischen 400 Nm und 600 Nm zu beaufschlagen.

Durch eine Kraft zwischen 400 Nm und 600 Nm, vorzugsweise zwischen 530 Nm und 580 Nm, besonders bevorzugt 550 Nm, werden jeweilige Kegelrollenlager im Normalbetrieb einer Pelletierpresse in ihrer vorgegebenen Position gehalten, wobei eine reversible Auslenkung bzw. eine reversible Verschiebung der Kegelrollenlager in einer besonderen Betriebssituation, wie bspw. bei einem Eindringen eines Fremdkörpers in die Pelletierpresse, ermöglicht wird.

Die erfindungsgemässe Pelletierpresse umfasst mindestens einen Koller, mindestens ein Kegelrollenlager zum Lagern des mindestens einen Kollers, und eine mögliche Ausgestaltung der vorgestellten Einstellvorrichtung.

Aufgrund der Einstellvorrichtung der vorgestellten Pelletierpresse kann die Pelletierpresse dauerhaft, d.h. ohne regelmäßige Pausen zur Einstellung ihrer Kegelrollenlager, betrieben werden.

Nach der Erfindung ist vorgesehen, dass das mindestens eine mechanische Federelement der Einstellvorrichtung, das mindestens eine Kegelrollenlager und der mindestens eine Koller zusammen in einer gegenüber einer Umgebung abgeschlossenen Hülle angeordnet sind.

Da die Einstellvorrichtung der vorgestellten Pelletierpresse ohne manuelle Einstellung betrieben werden kann, kann auf einen Eingriff zum manuellen Einstellen der Einstellvorrichtung verzichtet werden. Entsprechend können das mindestens eine mechanische Federelement der Einstellvorrichtung, das mindestens eine Kegelrollenlager und der mindestens eine Koller zusammen in einer gegenüber einer Umgebung abgeschlossenen Hülle angeordnet und entsprechend vor Umgebungseinflüssen, wie bspw. Staub oder Feuchtigkeit, geschützt werden.

In weiterer Ausgestaltung kann vorgesehen sein, dass das mindestens eine mechanische Federelement über mindestens einen Führungsbolzen und eine Andruckscheibe mit dem mindestens einen Kegelrollenlager verbunden ist.

Führungsbolzen eignen sich besonders vorteilhaft zum Kontrollieren eines Kraftpfades, in dem eine durch das mindestens eine mechanische Federelement wirkende Kraft wirkt. Entsprechend wird durch Führungsbolzen ein Ausweichen der Kraft durch bspw. eine Verformung des mindestens einen mechanischen Federelements verhindert und eine maximale Beaufschlagung der Kegelrollenlager durch die Kraft sichergestellt.

Eine Andruckscheibe bewirkt eine Verteilung einer durch das mindestens eine mechanische Federelement bereitgestellten Kraft auf eine durch die Andruckscheibe vorgegebene Fläche, so dass eine punktuelle und entsprechend ggf. asymmetrische Wirkung der Kraft auf ein jeweiliges Kegelrollenlager verhindert wird.

In weiterer Ausgestaltung kann vorgesehen sein, dass die Pelletierpresse zumindest teilweise aus gehärtetem Stahl besteht.

Um einen Verschleiß der Pelletierpresse durch die von der vorgestellten Einstellvorrichtung bereitgestellte Kraft zu minimieren, haben sich Bauteile aus gehärtetem Stahl als besonders vorteilhaft erwiesen.

Als gehärteter Stahl kann bspw. sogenannter "C43 Stahl" zur Anwendung kommen.

In weiterer Ausgestaltung kann vorgesehen sein, dass das mindestens eine Kegelrollenlager aus gehärtetem Stahl besteht.

Da das Kegelrollenlager direkt durch die von der vorgestellten Einstellvorrichtung bereitgestellte Kraft beaufschlagt wird, bedingt ein aus gehärtetem Stahl gefertigtes Kegelrollenlager eines besonders lange Standzeit der vorgestellten Pelletierpresse.

Gemäß einem zweiten Aspekt betrifft die vorgestellte Erfindung ein Verfahren zum Betreiben einer Pelletierpresse..

Dabei umfasst das vorgestellte Verfahren einen Einstellschritt, bei dem eine durch das mindestens eine Federelement auf das mindestens eine Kegelrollenlager aufgebrachte Kraft einmalig, durch Anordnen des mindestens einen Federelements an dem mindestens einen Kegelrollenlager, eingestellt wird.

Weiterhin umfasst das vorgestellte Verfahren einen Pressschritt, bei dem Pellets durch die Pelletierpresse gepresst werden.

Die Erfindung wird in einer bevorzugten Ausführungsform unter Bezugnahme auf eine Zeichnung beispielhaft beschrieben, wobei weitere vorteilhafte Einzelheiten den Figuren der Zeichnung zu entnehmen sind. Funktionsmäßig gleiche Teile sind dabei mit denselben Bezugszeichen versehen.

Die Figuren der Zeichnung zeigen im Einzelnen:
- Figur 1:: eine mögliche Ausgestaltung der erfindungsgemäßen Einstellvorrichtung in einer möglichen Ausgestaltung der erfindungsgemäßen Pelletierpresse, und
- Figur 2:: eine mögliche Ausgestaltung des erfindungsgemäßen Verfahrens.

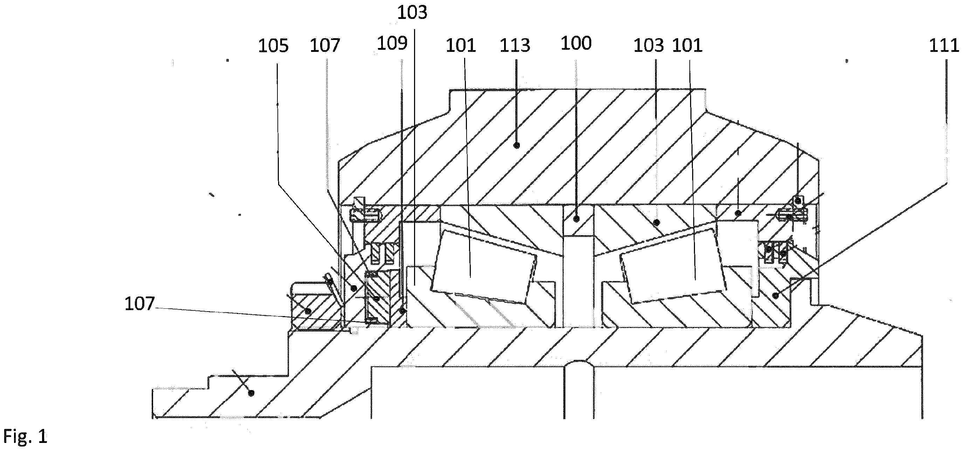

In Figur 1 ist eine Pelletierpresse 100 dargestellt. Die Pelletierpresse umfasst zwei Koller 101, ein Kegelrollenlager 103 und eine Einstellvorrichtung 105.

Die Einstellvorrichtung 105 umfasst vier mechanische Federelemente 107, von denen in Figur 1 eines erkennbar ist.

Die mechanischen Federelemente 107 sind in Figur 1 als Ringfederelemente ausgestaltet und drücken über eine Andruckscheibe 109 auf das Kegelrollenlager 103.

Vorliegend pressen die mechanischen Federelemente 107 eine Andruckscheibe 109 auf das Kegelrollenlager 103, so dass das Kegelrollenlager 103 gleichmäßig mit einer Kraft beaufschlagt und ein einseitiges Abnutzen durch eine ungleichmäßig wirkende Kraft verhindert wird.

Eine Bewegung des Kegelrollenlagers 103 wird durch eine Aufnahme 111 begrenzt.

Aufgrund einer dauerhaften Beaufschlagung des Kegelrollenlagers 103 mit einem durch die mechanischen Federelemente 107 bereitgestellten Kraft wird das Kegelrollenlager 103 kontinuierlich in seiner Position gehalten, so dass auf ein manuelles Einstellen einer Position des Kegelrollenlagers 103 verzichtet werden kann.

Entsprechend kann die Pelletierpresse 100 dauerhaft bzw. ohne Pausen zum manuellen Einstellen der Position des Kegelrollenlagers 103 betrieben werden.

Da auf einen Eingriff zum manuellen Einstellen einer Position des Kegelrollenlagers 103 verzichtet werden kann, sind die Einstellvorrichtung 105, das Kegelrollenlager 103 und die Koller 101 vollständig von einer Hülle 113 umgeben bzw. gegenüber einer Umgebung abgeschirmt. Entsprechend eignet sich die Pelletierpresse besonders vorteilhaft für einen Einsatz an besonders belasteten Orten, wie bspw. in einem staubigen Speicher für Heu oder Sägespäne.

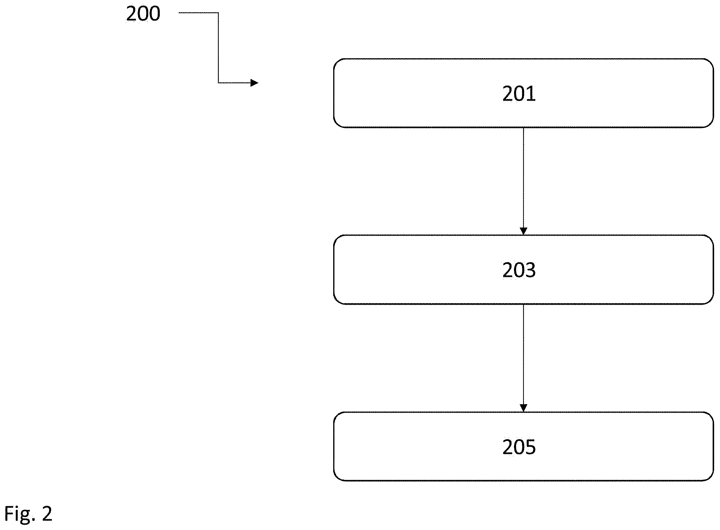

In Figur 2 ist ein Verfahren 200 zum Betreiben einer Pelletierpresse, wie bspw. der Pelletierpresse 100 gemäß Figur 1 dargestellt.

Das Verfahren 200 umfasst einen Herstellschritt 201, bei dem eine mögliche Ausgestaltung der vorgestellten Pelletierpresse hergestellt wird.

Weiterhin umfasst das vorgestellte Verfahren 200 einen Einstellschritt 203, bei dem eine durch das mindestens eine Federelement auf das mindestens eine Kegelrollenlager aufgebrachte Kraft einmalig, durch Anordnen des mindestens einen Federelements an dem mindestens einen Kegelrollenlager, eingestellt wird.

Weiterhin umfasst das vorgestellte Verfahren 200 einen Pressschritt 205, bei dem Pellets durch die Pelletierpresse gepresst werden.

### BEZUGSZEICHENLISTE

100 Pelletierpresse
101 Koller
103 Kegelrollenlager
105 Einstellvorrichtung
107 Federelement
109 Andruckscheibe
111 Aufnahme
113 Hülle
200 Verfahren
201 Herstellschritt
203 Einstellschritt
205 Pressschritt

## Patentansprüche

1. Pelletierpresse (100) zum Pressen von Pellets,
wobei die Pelletierpresse (100) umfasst:
- mindestens einen Koller (101),
- mindestens ein Kegelrollenlager (103) zum Lagern des mindestens einen Kollers (101), und
- eine Einstellvorrichtung (105) zum automatischen Einstellen einer Vorspannung für das Kegelrollenlager (103) des Kollers (101),
wobei die Einstellvorrichtung (105) mindestens ein mechanisches Federelement (107) umfasst, das dazu konfiguriert ist, das mindestens eine Kegelrollenlager (103) mit einer vorgegebenen Kraft in eine vorgegebene Position zu drücken, wobei das mindestens eine mechanische Federelement (107) ein Ringfederspannelement umfasst **dadurch gekennzeichnet, dass** das mindestens eine mechanische Federelement (107) der Einstellvorrichtung (105), das mindestens eine Kegelrollenlager (103) und der mindestens eine Koller (101) zusammen in einer gegenüber einer Umgebung abgeschlossenen Hülle (113) angeordnet sind.

2. Pelletierpresse (100) nach Anspruch 1,
**dadurch gekennzeichnet,**
**dass** das mindestens eine mechanische Federelement (107) dazu konfiguriert ist, das mindestens eine Kegelrollenlager (103) mit einer Kraft zwischen 400 Nm und 600 Nm zu beaufschlagen.

3. Pelletierpresse (100) nach einem der vorhergehenden Ansprüche,
**dadurch gekennzeichnet,**
**dass** das mindestens eine mechanische Federelement (107) über mindestens einen Führungsbolzen und eine Andruckscheibe (109) mit dem mindestens einen Kegelrollenlager (103) verbunden ist.

4. Pelletierpresse (100) nach einem der vorhergehenden Ansprüche,
**dadurch gekennzeichnet,**
**dass** die Pelletierpresse (100) zumindest teilweise aus gehärtetem Stahl besteht.

5. Pelletierpresse (100) nach Anspruch 4,
**dadurch gekennzeichnet,**
**dass** das mindestens eine Kegelrollenlager (103) aus gehärtetem Stahl besteht.

6. Verfahren (200) zum Betreiben einer Pelletierpresse (100) nach einem der Ansprüche 1 bis 5,
wobei das Verfahren (200) umfasst:
- einmaliges Einstellen einer durch das Federelement (107) auf das Kegelrollenlager (103) aufgebrachten Kraft durch Anordnen des Einstellelements (105) an dem mindestens einen Kegelrollenlager (103),
- Pressen von Pellets durch die Pelletierpresse (100).

## Claims

1. Pelletising press (100) for pressing pellets,
wherein the pelletising press (100) comprises
- at least one pan grinder (101),
- at least one tapered roller bearing (103) for supporting the at least one pan grinder (101), and
- an adjusting device (105) for automatically adjusting a preload for the tapered roller bearing (103) of the pan grinder (101),
wherein the adjusting device (105) comprises at least one mechanical spring element (107) which is configured to press the at least one tapered roller bearing (103) into a predetermined position with a predetermined force, wherein the at least one mechanical spring element (107) comprises an annular spring tensioning element, **characterised in that** the at least one mechanical spring element (107) of the adjusting device (105), the at least one tapered roller bearing (103) and the at least one pan grinder (101) are arranged together in a casing (113) which is closed off from an environment.

2. Pelletising press (100) according to claim 1,
**characterised in that**
the at least one mechanical spring element (107) is configured to apply a force of between 400 Nm and 600 Nm to the at least one tapered roller bearing (103).

3. Pelletising press (100) according to one of the preceding claims,
**characterised in that**
the at least one mechanical spring element (107) is connected to the at least one tapered roller bearing (103) via at least one guide pin and a pressure disc (109).

4. Pelletising press (100) according to one of the preceding claims,
**characterised in that**
the pelletising press (100) consists at least partially of hardened steel.

5. Pelletising press (100) according to claim 4,
**characterised in that**
the at least one tapered roller bearing (103) is made of hardened steel.

6. A method (200) of operating a pellet press (100) according to any one of claims 1 to 5,
wherein the method (200) comprises
- adjusting once a force applied by the spring element (107) to the tapered roller bearing (103) by arranging the adjusting device (105) on the at least one tapered roller bearing (103),
- pressing pellets through the pelletising press (100).

## Revendications

1. Presse à granuler (100) pour presser des granulés,
la presse à granuler (100) comprenant :
- au moins un galet (101),
- au moins un roulement à rouleaux coniques (103) pour supporter ledit au moins un galet (101), et
- un dispositif de réglage (105) pour régler automatiquement une précontrainte pour le roulement à rouleaux coniques (103) du galet (101), le dispositif de réglage (105) comprenant au moins un élément de ressort mécanique (107) configuré pour pousser ledit au moins un roulement à rouleaux coniques (103) vers une position prédéterminée avec une force prédéterminée, ledit au moins un élément de ressort mécanique (107) comprenant un élément de serrage à ressort annulaire,
**caractérisée en ce que**
ledit au moins un élément de ressort mécanique (107) du dispositif de réglage (105), ledit au moins un roulement à rouleaux coniques (103) et ledit au moins un galet (101) sont disposés ensemble dans une enveloppe (113) fermée par rapport à un environnement.

2. Presse à granuler (100) selon la revendication 1,
**caractérisée en ce que**
ledit au moins un élément de ressort mécanique (107) est configuré pour solliciter ledit au moins un roulement à rouleaux coniques (103) avec une force comprise entre 400 Nm et 600 Nm.

3. Presse à granuler (100) selon l'une des revendications précédentes,
**caractérisée en ce que**
ledit au moins un élément de ressort mécanique (107) est relié audit au moins un roulement à rouleaux coniques (103) par l'intermédiaire d'au moins un boulon de guidage et d'une rondelle de pression (109).

4. Presse à granuler (100) selon l'une des revendications précédentes,
**caractérisée en ce que**
la presse à granuler (100) est au moins partiellement en acier trempé.

5. Presse à granuler (100) selon la revendication 4,
**caractérisée en ce que**
ledit au moins un roulement à rouleaux coniques (103) est en acier trempé.

6. Procédé (200) d'exploitation d'une presse à granuler (100) selon l'une des revendications 1 à 5, ledit procédé (200) consistant à :
- régler une seule fois une force appliquée par l'élément de ressort (107) sur le roulement à rouleaux coniques (103) en plaçant le dispositif de réglage (105) sur ledit au moins un roulement à rouleaux coniques (103),
- presser des granulés par la presse à granuler (100).
